(19) Europäisches Patentamt
European Patent Office
Office européen des brevets

(11) **EP 2 549 355 B1**

(12) **FASCICULE DE BREVET EUROPEEN**

(45) Date de publication et mention
de la délivrance du brevet:
**03.09.2014 Bulletin 2014/36**

(51) Int Cl.:
***G06F 1/08*** *(2006.01)*

(21) Numéro de dépôt: **12176748.7**

(22) Date de dépôt: **17.07.2012**

(54) **Procédé et circuit d'ajustement d'une fréquence d'horloge**

Verfahren und Schaltkreis zur Einstellung einer Taktfrequenz

Clock frequency adjusting method and circuit

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.07.2011 FR 1156639**

(43) Date de publication de la demande:
**23.01.2013 Bulletin 2013/04**

(73) Titulaire: **Inside Secure
13590 Meyreuil (FR)**

(72) Inventeurs:
• **Bracmard, Gaetan
13119 Saint Savourin (FR)**
• **Maraninchi, Jean-Pascal
13006 Marseille (FR)**
• **Roche, Julien
13200 Arles (FR)**

(74) Mandataire: **Marchand, André et al
OMNIPAT
24 Place des Martyrs de la Résistance
13100 Aix-en-Provence (FR)**

(56) Documents cités:
**US-A- 5 815 043 US-B1- 6 204 694**

**Description**

L'invention concerne un procédé d'ajustement d'une fréquence d'horloge d'oscillateur et un circuit d'ajustement de fréquence d'horloge d'oscillateur. En particulier, l'invention concerne un procédé permettant d'ajuster automatiquement la fréquence d'horloge d'un dispositif USB (Universal Serial Bus) et un dispositif USB comprenant un tel circuit d'ajustement de fréquence d'horloge.

La norme USB est basée sur une spécification technique détaillant des communications entre un contrôleur hôte (tel qu'un ordinateur personnel) et un dispositif, par exemple un clavier, une souris, un appareil photo numérique, une mémoire externe, etc. via une interface appelée port USB. La norme USB 2.0 définit différents débits de transfert de données, y compris un mode bas débit à 1,5 Mb/sec avec une marge de précision de +1,5%.

Comme le contrôleur hôte n'envoie pas de signal d'horloge au dispositif, le dispositif doit générer son propre signal d'horloge avec suffisamment de précision pour respecter le débit de transfert de données USB exigé. Un oscillateur à cristaux de quartz peut être prévu, mais cette solution ne convient pas aux applications à faible coût et occupe trop d'espace. Une solution alternative est de baser la génération des cycles d'horloge sur un signal de synchronisation envoyé par l'hôte, par exemple un signal de début de trame ou un signal d'entretien "Keep Alive" envoyé en l'absence de trafic pour empêcher le dispositif d'entrer dans un état de veille. Dans ce cas, l'intervalle de temps entre deux signaux de synchronisation consécutifs est de 1 ms. Pour un dispositif USB fonctionnant avec une fréquence d'horloge de 6000 KHz, une marge de précision de $\pm 1,5\%$ donne une marge de fréquence de $\pm$ 90 KHz, rendant entre 5910 et 6090 cycles d'horloge par intervalle de temps de 1 ms.

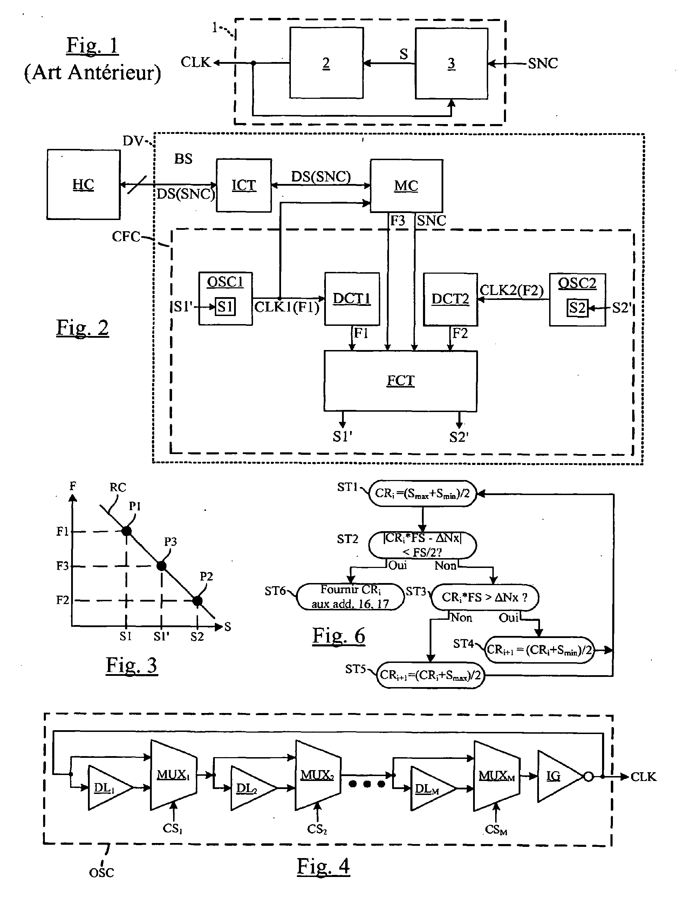

La figure 1 illustre un circuit d'ajustement de fréquence d'horloge 1 comprenant un oscillateur 2 et une unité d'étalonnage 3. L'oscillateur 2 génère un signal d'horloge CLK qui est fourni à l'unité d'étalonnage 3. Lorsque l'unité d'étalonnage 3 reçoit une première occurrence d'un signal de synchronisation SNC, elle commence à compter le nombre de cycles du signal d'horloge CLK sur son entrée jusqu'à la prochaine occurrence du signal de synchronisation, où elle s'arrête de compter. L'unité d'étalonnage 3 détermine la différence entre le nombre compté de cycles et le nombre souhaité de cycles, puis fournit un signal de contrôle S à l'oscillateur 3, qui augmente ou diminue sa fréquence en conséquence.

A ce moment, le "pas de fréquence" de l'oscillateur, le changement de fréquence en sortie de l'oscillateur 2 en raison de l'application du signal de contrôle S, est inconnu. Cela résulte du fait que le fonctionnement de l'oscillateur peut varier avec le temps, par exemple en raison d'une augmentation de température, altérant le fonctionnement de l'oscillateur. Ainsi, la fréquence souhaitée sera typiquement trop élevée ou trop basse après la première phase d'ajustement.

Le nombre de cycles d'horloge est par conséquent recompté lors du prochain intervalle de temps afin de déterminer le pas de fréquence de l'oscillateur. L'unité d'étalonnage 3 fournit à nouveau le signal de contrôle S à l'oscillateur 3 pour obtenir la fréquence souhaitée après le second intervalle de temps.

Il peut par conséquent être souhaité de prévoir un circuit capable d'ajuster la fréquence d'un oscillateur après un seul intervalle de temps.

Le document US 5 815 043 décrit un oscillateur à compensation de dérives comprenant des interrupteurs couplés à des lignes à retard, et un contrôleur pour comparer une fréquence de sortie de l'oscillateur avec une fréquence de référence, et ouvrir ou fermer les interrupteurs en fonction du résultat de la comparaison.

Le document US 6 204 694 décrit un procédé pour fournir un signal d'horloge haute fréquence à partir de plusieurs oscillateurs en anneau programmables et sélectionnables. Lorsqu'une fréquence de sortie présente une dérive par rapport à une fréquence de référence, un oscillateur en anneau différent est sélectionné, ou la fréquence de l'oscillateur en anneau sélectionné est modifiée.

Des modes de réalisation de l'invention concernent un procédé d'ajustement d'une fréquence d'horloge d'oscillateur, comprenant les étapes consistant à prévoir un premier oscillateur, appliquer une première valeur de consigne au premier oscillateur, et déterminer une première valeur de fréquence d'oscillateur dans un premier intervalle de temps. Le procédé comprend en outre les étapes consistant à prévoir un second oscillateur, appliquer une seconde valeur de consigne au second oscillateur, déterminer une seconde valeur de fréquence d'oscillateur dans un deuxième intervalle de temps, déterminer une nouvelle valeur de consigne de fréquence à partir des première et seconde valeurs de fréquence, des première et seconde valeurs de consigne, et d'une valeur de fréquence souhaitée, et appliquer la nouvelle valeur de consigne de fréquence à l'un des oscillateurs.

Selon un mode de réalisation, le procédé comprend également les étapes consistant à compter le nombre de cycles d'horloge du premier oscillateur dans le premier intervalle de temps afin de déterminer la première valeur de fréquence, et compter le nombre de cycles d'horloge du second oscillateur durant le deuxième intervalle de temps afin de déterminer la seconde valeur de fréquence.

Selon un mode de réalisation, les premier et deuxième intervalles de temps sont le même intervalle de temps.

Selon un mode de réalisation, l'étape consistant à déterminer la nouvelle valeur de consigne comprend en outre les étapes consistant à : déterminer une première différence entre la première valeur de fréquence et la seconde valeur de fréquence; déterminer une seconde différence, entre la première valeur de consigne de fréquence et la seconde valeur de consigne de fréquence; diviser la première différence par la seconde différence afin d'obtenir un pas de fréquence; déterminer une troisième différence, entre la première ou la seconde valeur de fréquence et la valeur de fréquence souhaitée; diviser la troisième différence par le pas de fréquence afin d'obtenir une valeur de correction; et ajouter la valeur de correction à la première valeur de consigne afin d'obtenir la nouvelle valeur de consigne.

Selon un mode de réalisation, l'étape consistant à déterminer la nouvelle valeur de consigne comprend en outre les étapes consistant à : déterminer une première différence entre la première valeur de fréquence et la seconde valeur de fréquence; multiplier la première valeur de consigne par une différence entre la valeur de fréquence souhaitée et la seconde valeur de fréquence afin d'obtenir un premier produit; multiplier la seconde valeur de consigne par une différence entre la valeur de fréquence souhaitée et la première valeur de fréquence afin d'obtenir un second produit; ajouter le premier produit et le second produit afin d'obtenir une première somme; et diviser la première somme par la première différence afin d'obtenir la nouvelle valeur de consigne.

Selon un mode de réalisation, l'étape consistant à déterminer une valeur de fréquence d'oscillateur d'un oscillateur comprend en outre les étapes consistant à recevoir un signal de synchronisation, et compter un nombre de cycles d'horloge de l'oscillateur entre deux occurrences consécutives du signal de synchronisation.

Selon un mode de réalisation, le procédé comprend en outre l'étape consistant à ajuster la fréquence du second oscillateur afin de maintenir une différence de fréquence par rapport au premier oscillateur.

Selon un mode de réalisation, le procédé comprend en outre l'étape consistant à sélectionner la seconde valeur de consigne de fréquence de telle sorte que la différence entre la première valeur de consigne et la seconde valeur de consigne est une puissance de deux.

Selon un mode de réalisation, le procédé est utilisé pour ajuster la fréquence d'horloge d'un dispositif USB recevant un signal de synchronisation au moyen d'une interface de communication.

Des modes de réalisation de l'invention concernent également un circuit d'ajustement de fréquence d'horloge comprenant un premier oscillateur pour générer un premier signal d'horloge par rapport à une première valeur de consigne de fréquence, le circuit comprenant en outre un second oscillateur pour générer un second signal d'horloge par rapport à une seconde valeur de consigne de fréquence, et étant configuré pour: appliquer une première valeur de consigne de fréquence au premier oscillateur et une seconde valeur de consigne de fréquence au deuxième oscillateur; déterminer une fréquence du premier oscillateur dans un premier intervalle de temps, et une fréquence du deuxième oscillateur dans un deuxième intervalle de temps; déterminer une nouvelle valeur de consigne de fréquence à partir des première et seconde valeurs de fréquence, des première et seconde valeurs de consigne, et d'une valeur de fréquence souhaitée; et appliquer la nouvelle valeur de consigne de fréquence à l'un des oscillateurs.

Selon un mode de réalisation, le circuit comprend deux compteurs recevant un des signaux d'horloge, et fournissant une valeur de décompte représentative du nombre de cycles d'horloge comptés dans le premier ou le deuxième intervalle de temps.

Selon un mode de réalisation, le circuit est configuré pour déterminer la fréquence du premier oscillateur et la fréquence du deuxième oscillateur dans le même intervalle de temps.

Selon un mode de réalisation, le premier oscillateur et le second oscillateur comprennent des oscillateurs en anneau, chacun comprenant des circuits à retard, des multiplexeurs, et au moins un inverseur.

Selon un mode de réalisation, le circuit reçoit des signaux de synchronisation délimitant l'intervalle de temps, et le signal de synchronisation est un signal d'entretien envoyé en respectant la norme USB 2.0.

Des modes de réalisation de l'invention concernent également un dispositif USB 2.0 comprenant un circuit d'interface pour recevoir un signal de données comprenant un signal de synchronisation, un microcontrôleur, et un circuit d'ajustement de fréquence d'horloge selon l'invention.

Des modes de réalisations de la présente invention vont maintenant être décrits à titre non limitatif, en relation avec les figures jointes parmi lesquelles :

- La figure 1 précédemment décrite illustre un circuit d'ajustement de fréquence d'horloge conventionnel,
- La figure 2 représente sous forme de blocs un dispositif comprenant un circuit d'ajustement de fréquence d'horloge d'oscillateur selon un mode de réalisation de l'invention,

- La figure 3 est un graphique de la relation entre la valeur de fréquence de l'oscillateur et la valeur de consigne de l'oscillateur pour le circuit d'ajustement de fréquence de la figure 2,
- La figure 4 est un schéma de principe d'un oscillateur présent dans le circuit d'ajustement de fréquence de la figure 2,
- La figure 5 est un schéma de principe d'un mode de réalisation du circuit d'ajustement de fréquence de la figure 2,
- La figure 6 est un organigramme d'un procédé de détermination d'une valeur de correction de fréquence selon le mode de réalisation de la figure 5, et
- La figure 7 est un schéma de principe d'un autre mode de réalisation du circuit d'ajustement de fréquence de la figure 2.

La figure 2 représente un dispositif DV comprenant une interface de communication ICT, un microcontrôleur MC, et un circuit d'ajustement de fréquence d'horloge CFC selon un mode de réalisation de l'invention. Le dispositif DV est relié à un contrôleur hôte HC via le circuit d'interface ICT au moyen d'un bus BS. Le microcontrôleur MC est relié au circuit d'interface ICT et au circuit CFC au moyen de fils de connexion.

Le circuit CFC comprend un oscillateur OSC1, un oscillateur OSC2, un circuit de détermination de fréquence d'oscillateur DCT1, un circuit de détermination de fréquence d'oscillateur DCT2, et un circuit de calcul de fréquence FCT. Les oscillateurs OSC1, OSC2 sont chacun réglés sur une "valeur de consigne" de fréquence S1, S2, respectivement. La valeur de consigne correspond à un ajustement de fréquence (retard) qui peut être appliqué à l'oscillateur pour ajuster sa fréquence, à la hausse ou à la baisse, en sortie.

Un signal de données DS est envoyé et reçu du contrôleur hôte HC et du dispositif DV au moyen du bus BS. Un signal de synchronisation SNC, tel qu'un signal d'entretien ou un signal de début de trame selon la norme USB 2.0, est inclus dans le signal de données et transféré au microcontrôleur MC via le circuit d'interface ICT. Le microcontrôleur MC transfère ensuite le signal SNC au circuit CFC.

Le signal de synchronisation SNC définit des intervalles de temps, un intervalle de temps représentant le temps entre deux occurrences ou impulsions consécutives du signal SNC. Le microcontrôleur MC fournit également, au circuit de calcul de fréquence FCT, une valeur de fréquence souhaitée F3 correspondant à la fréquence de signal d'horloge requise pour ses besoins en termes de transfert de données, par exemple 6000 KHz.

Lors d'un premier intervalle de temps $\Delta t_i$, l'oscillateur OSC1 fonctionne avec une valeur de consigne S1, et génère un signal d'horloge CLK1 présentant une valeur de fréquence F1. Le signal d'horloge CLK1(F1) est fourni au microcontrôleur MC pour ses besoins et au circuit DCT1. Le circuit de détermination DCT1 détermine la fréquence du signal d'horloge en entrée et fournit en sortie la fréquence F1 au circuit FCT. L'oscillateur OSC2 fonctionne avec une valeur de consigne S2, et génère un signal d'horloge CLK2 présentant une valeur de fréquence F2. Le signal d'horloge CLK2(F2) est fourni au circuit DCT2. Le circuit de détermination DCT2 détermine la fréquence du signal d'horloge en entrée et fournit en sortie la fréquence F2 au circuit FCT.

Le circuit de calcul de fréquence FCT calcule ensuite une nouvelle valeur de consigne S1' à partir des valeurs de fréquence F1, F2, des valeurs de consigne S1, S2, et de la valeur de fréquence souhaitée F3. La nouvelle valeur de consigne S1' est appliquée à l'oscillateur OSC1 lors d'un intervalle de temps suivant $\Delta t_{i+1}$ afin d'obtenir la fréquence souhaitée F3 en sortie de l'oscillateur OSC1. De manière optionnelle, une nouvelle valeur de consigne S2' peut être déterminée et appliquée à l'oscillateur OSC2 de façon similaire.

La figure 3 est un graphique illustrant la relation entre les valeurs de fréquence F et les valeurs de consigne S des oscillateurs OSC1, OSC2 lors d'un intervalle de temps $\Delta t_i$. Un point P1 correspond à la fréquence F1 de l'oscillateur OSC1 et à sa valeur de consigne S1. Un point P2 correspond à la fréquence F2 de l'oscillateur OSC2 et à sa valeur de consigne S2. Une courbe de réponse RC est extrapolée entre les points P1, P2. Un point P3 correspond à la fréquence souhaitée F3 de l'oscillateur OSC1 et à la nouvelle valeur de consigne S1' à appliquer à l'oscillateur OSC1 lors de l'intervalle de temps suivant $\Delta t_{i+1}$ afin d'obtenir ladite fréquence souhaitée. Dans ce mode de réalisation, les oscillateurs OSC1, OSC2 sont illustrés comme présentant des fréquences F1, F2 et des valeurs de consigne S1, S2 respectivement supérieures et inférieures à la fréquence souhaitée F3 et à la valeur de consigne S1'. Il sera compris que dans d'autres modes de réalisation les fréquences F1, F2 et les valeurs de consigne S1, S2 peuvent toutes être supérieures ou inférieures à la fréquence F3, la valeur de consigne S1'.

Par conséquent, la valeur de consigne S1' peut être déterminée à l'aide des valeurs F1, S1, F2, S2, F3 en exploitant les relations entre les points P1, P2, P3. Par exemple, il est bien connu que pour trouver la pente m d'une ligne définie par deux points p1(x1, y1) et p2(x2, y2), il est possible d'utiliser l'équation générale suivante :

$$m = (y1 - y2) / (x1 - x2)$$

dans laquelle m est la pente et x1, x2, y1, y2 sont les coordonnées des deux points p1, p2.

Le circuit d'ajustement de fréquence d'horloge CFC, et plus particulièrement le circuit de calcul de fréquence FCT illustré plus haut dans la figure 2, calcule la nouvelle valeur de consigne de fréquence S1' afin d'obtenir la fréquence souhaitée F3 en mettant en oeuvre les équations illustrées ci-après. Spécifiquement, la nouvelle valeur de consigne S1' peut être calculée grâce aux équations suivantes et aux valeurs de fréquence F1, F2 des oscillateurs OSC1, OSC2, aux première et seconde valeurs de consigne S1, S2, et à la valeur de fréquence souhaitée F3.

La pente m de la courbe de réponse RC passant par les points P1, P2, P3 est égale à :

*[éq. 1]*

$$m = (F1-F3)/(S1-S1') = (F3-F2)/(S1'-S2) = (F1-F2)/(S1-S2)$$

En utilisant uniquement le premier terme de l'équation 1, la pente m est égale à :

*[éq. 2]*

$$m = (F1-F3)/(S1-S1')$$

Ce qui résout S1' :

*[éq. 3]*

$$S1' = S1 - (F1-F3)/m$$

Le terme (F1-F3)/m est une "correction" CR qui est ajoutée à S1. Cette correction CR peut être une valeur négative, qui dépend des points P1, P2 qui sont inférieurs ou supérieurs au point P3. Dans ce cas, la valeur de consigne S1 de l'oscillateur OSC1 est diminuée au lieu d'être augmentée afin d'obtenir la nouvelle valeur de consigne S1'.

Puisque F1, F2, S1, S2 sont des valeurs connues, la pente m de la courbe de réponse RC peut être directement calculée en utilisant le dernier terme de l'équation 1 comme suit :

*[éq. 4]*

$$m = (F1-F2)/(S1-S2)$$

Par conséquent, la nouvelle valeur de consigne S1' peut être calculée en remplaçant l'équation 4 dans l'équation 3 comme suit :

*[éq. 5]*

$$S1' = S1 - (F1-F3)/[(F1-F2)/(S1-S2)]$$

La figure 4 est un schéma de principe d'un oscillateur OSC, représentatif de chaque oscillateur OSC1, OSC2 selon un mode de réalisation de l'invention. L'oscillateur OSC est un oscillateur en anneau comprenant une porte inverseuse IG, M circuits à retard $DL_1$ à $DL_M$, et M circuits multiplexeurs $MUX_1$ à $MUX_M$, pour un total M de paires retard-multiplexeur DL-MUX. Le nombre maximum M de paires retard-multiplexeur peut aller de quelques paires à une centaine ou davantage, selon le degré de précision requis, l'espace disponible pour l'oscillateur, etc.

Chaque multiplexeur $MUX_1$ à $MUX_M$ présente une entrée recevant un signal depuis son circuit à retard $DL_1$ à $DL_M$ correspondant, et une entrée recevant un signal qui contourne le circuit à retard. Chaque multiplexeur est contrôlé par la valeur de consigne, par exemple un signal de contrôle $CS_0$, $CS_1$,... $CS_M$ obtenu à partir d'un décodage (non représenté sur la figure 4) de la valeur de consigne. La porte inverseuse IG se situe après le dernier multiplexeur $MUX_M$ et fournit le signal d'horloge oscillant CLK, qui est également fourni à la première paire retard-multiplexeur $DL_1$-$MUX_1$.

A titre d'exemple, pour un oscillateur comprenant un total de M=32 paires retard-multiplexeur, une valeur de consigne S=10 conduira dix des multiplexeurs à sélectionner l'entrée de son circuit à retard correspondant, diminuant la fréquence en sortie de l'oscillateur de dix fois le retard du circuit à retard DL. S'il est ultérieurement nécessaire d'augmenter la fréquence de l'oscillateur, la valeur de consigne peut être abaissée, par exemple à S=8 afin de désélectionner deux des circuits à retard, augmentant la fréquence en sortie de deux fois la valeur du retard. Ainsi, selon la valeur de consigne de l'oscillateur, un nombre correspondant de multiplexeurs sélectionnent l'entrée retardée.

Un pas de fréquence FS est défini comme le résultat en sortie de l'oscillateur de la différence de nombre de cycles d'horloge N en raison d'un ajustement d'une seule valeur de consigne (en sélectionnant ou désélectionnant un circuit à retard DL de l'oscillateur). Il doit être compris que plus la valeur de consigne est élevée, plus il y a de multiplexeurs activés pour sélectionner les entrées retardées, plus le retard est important, et ainsi plus le nombre de cycles d'horloge est faible et plus la fréquence d'horloge est basse.

Lors d'une phase de conception des oscillateurs, le retard de chaque circuit à retard est calculé, et le nombre de cellules à retard est choisi de telle sorte que la fréquence cible peut être atteinte dans toutes les conditions de travail ; meilleur scénario, scénario typique et pire scénario. Le nombre de circuits retard-multiplexeurs qui peuvent être sélectionnés par les signaux de contrôle parmi le nombre total M de paires retard-multiplexeur disponibles pour un oscillateur est compris entre un nombre minimum $S_{min}$ et un nombre maximum $S_{max}$. En général, le nombre minimum $S_{min}$ est égal à zéro et le nombre maximum $S_{max}$ est égal au nombre total M de paires retard-multiplexeur, mais en fonction de la conception et de la fabrication de l'oscillateur, ces valeurs peuvent différer. Par exemple, il peut être trouvé que pour que l'oscillateur soit capable d'atteindre la fréquence cible, au moins cinq circuits à retard doivent toujours être sélectionnés, dans ce cas $S_{min}=5$.

De préférence, la sélection des circuits à retard conduit à un changement linéaire correspondant de la fréquence en sortie de l'oscillateur. De plus, les oscillateurs OSC1, OSC2 sont de préférence conçus pour être aussi identiques que possible, pour obtenir la meilleure précision possible dans le calcul de la nouvelle ou des nouvelles valeurs de consigne.

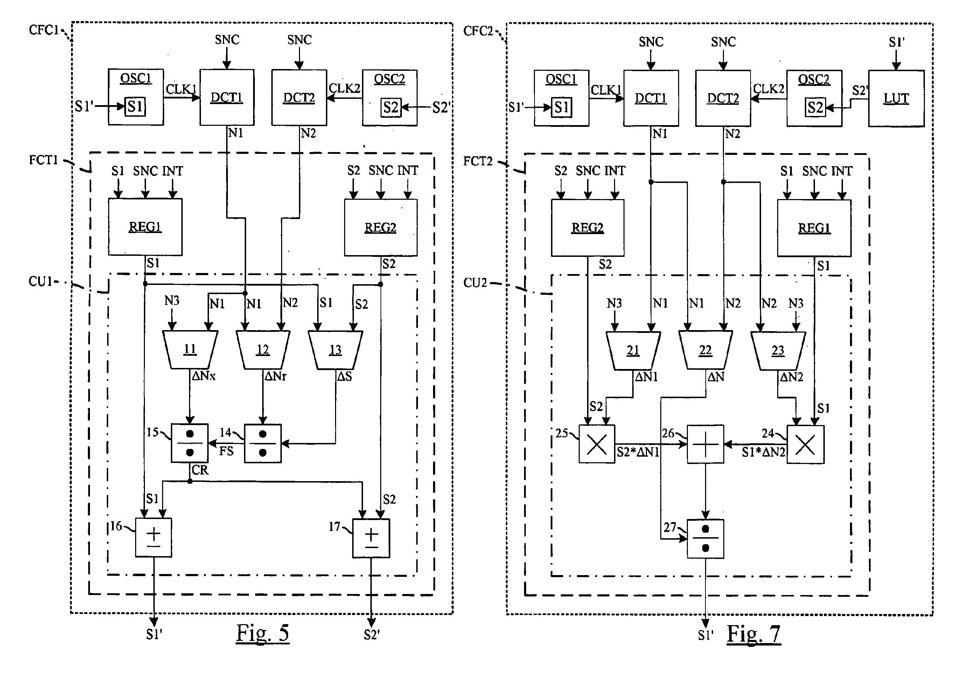

La figure 5 est un schéma de principe d'un circuit d'ajustement de fréquence d'horloge CFC1 selon un mode de réalisation de l'invention. Le circuit CFC1 comprend les oscillateurs OSC1, OSC2, les circuits de détermination de fréquence DCT1, DCT2, et un circuit de calcul de fréquence FCT1.

Lors d'un premier intervalle de temps $\Delta t_i$, l'oscillateur OSC1 fonctionne avec une valeur de consigne S1, et génère un signal d'horloge CLK1 présentant une valeur de fréquence F1. Le signal d'horloge CLK1(F1) est fourni au microcontrôleur MC (non représenté) pour ses besoins et au circuit DCT1. Le circuit de détermination DCT1 est, dans ce mode de réalisation, un compteur recevant en entrée le signal de synchronisation SNC et le signal d'horloge CLK1. Lors de la réception d'une première occurrence du signal de synchronisation SNC, le circuit DCT1 commence à compter le nombre de cycles d'horloge du signal d'horloge CLK1 sur son entrée. Lors de la réception d'une seconde occurrence du signal de synchronisation SNC, le circuit DCT1 arrête de compter le nombre de cycles d'horloge et fournit ensuite en sortie une valeur de décompte de cycles d'horloge N1 au circuit de calcul de fréquence FCT1.

De la même façon, l'oscillateur OSC2 fonctionne avec une valeur de consigne S2, et génère un signal d'horloge CLK2 présentant une valeur de fréquence F2. Le signal d'horloge CLK2(F2) est fourni au circuit DCT2, qui reçoit également en entrée le signal de synchronisation SNC et compte le nombre de cycles d'horloge du signal d'horloge CLK2 pendant deux occurrences du signal de synchronisation. Le circuit de détermination DCT2 fournit en sortie une valeur de décompte de cycles d'horloge N2 au circuit de calcul de fréquence FCT1.

Le circuit FCT1 comprend un registre REG1, un registre REG2, et une unité de calcul CU1. Les registres REG1, REG2 reçoivent chacun en entrée la valeur de consigne actuelle de l'oscillateur OSC1, OSC2 (ici les valeurs de consignes S1, S2), le signal de synchronisation SNC, et un signal d'initialisation INT fourni par le microcontrôleur MC par exemple. Initialement, pour la première utilisation du dispositif, le registre REG1, REG2 est chargé avec une valeur de consigne déterminée par exemple par le microcontrôleur, et l'oscillateur OSC1, OSC2 est également réglé sur cette valeur de consigne. Puis, sur réception d'une occurrence du signal de synchronisation SNC, le registre REG1, REG2 est chargé avec la valeur de consigne actuelle S1, S2 de l'oscillateur OSC1 et fournit en sortie la valeur S1, S2 à l'unité de calcul CU1.

L'unité de calcul CU1 comprend un comparateur 11, un comparateur 12, un comparateur 13, un diviseur 14, un diviseur 15, un sommateur 16, et un sommateur 17. Le comparateur 11 reçoit sur une entrée la valeur de décompte N1 du circuit DCT1 et sur une autre entrée la valeur de décompte souhaitée N3 du microcontrôleur MC (non représenté sur la figure 5). Le comparateur 11 compare les deux valeurs, et détermine laquelle est la plus grande. C'est-à-dire, si la fréquence F1 de l'oscillateur OSC1 doit être augmentée ou diminuée pour atteindre la fréquence souhaitée F3. En fonction de cette comparaison, le comparateur 11 effectue N3-N1 ou N1-N3, et fournit en sortie une différence $\Delta Nx$, représentant une différence entre la valeur de décompte réelle N1 de l'oscillateur OSC1 et la valeur de décompte souhaitée N3 de l'oscillateur OSC1.

Le comparateur 12 reçoit sur une entrée la valeur de décompte N1 du circuit DCT1 et sur une autre entrée la valeur de décompte N2 du circuit DCT2. Le comparateur 12 effectue N2-N1 ou N1-N2, en fonction de l'oscillateur OSC1, OSC2 qui présente la valeur de décompte la plus élevée, et fournit en sortie une différence $\Delta Nr$, représentant la différence de valeur de décompte N1, N2 des oscillateurs OSC1, OSC2.

Le comparateur 13 reçoit sur une entrée la valeur de consigne S1 du registre REG1, et sur une autre entrée la valeur de consigne S2 du registre REG2. Selon l'oscillateur qui présente la valeur de consigne la plus élevée, le comparateur 13 effectue S2-S1 ou S1-S2, et fournit en sortie une différence de valeurs de consigne $\Delta S$, représentant la différence de valeurs de consigne S1, S2 des oscillateurs OSC1, OSC2.

Le diviseur 14 reçoit sur une entrée la différence $\Delta Nr$ du comparateur 12, et sur une autre entrée la différence $\Delta S$ du comparateur 13. Le diviseur 14 effectue une division de la première entrée par la seconde entrée $\Delta Nr/\Delta S$, afin

de trouver la pente m, tel qu'illustré dans l'équation 4 ci-dessus. La pente correspond au pas de fréquence FS entre les deux oscillateurs OSC1, OSC2.

Le diviseur 15 reçoit sur une entrée la différence ΔNx du comparateur 11, et sur une autre entrée le pas de fréquence FS du diviseur 14. Le diviseur 15 effectue une division de la première entrée par la seconde entrée ΔNx/FS, afin de trouver la correction CR selon l'équation 3 ci-dessus.

Le sommateur 16 reçoit sur une entrée la correction CR du diviseur 15, et sur une autre entrée la valeur de consigne S1 du registre REG1. Ensuite, le sommateur 16 ajoute la correction CR ou la soustrait en fonction de la valeur de consigne S1, en accord avec l'équation 3. Le sommateur 16 fournit ensuite la nouvelle valeur de consigne S1' à l'oscillateur OSC1, qui ajuste sa fréquence en conséquence afin d'obtenir le décompte souhaité N3. La nouvelle valeur de consigne S1' est également chargée dans le registre REG1 (non représenté sur la figure 5), en remplaçant la valeur de consigne précédente S1.

Le sommateur 17 reçoit sur une entrée la correction CR du diviseur 15, et sur une autre entrée la valeur de consigne S2 du registre REG2. Le sommateur 17 ajoute la correction CR ou la soustrait en fonction de la valeur de consigne S2, puis fournit la nouvelle valeur de consigne S2' à l'oscillateur OSC2, qui ajuste sa fréquence en conséquence. La nouvelle valeur de consigne S2' est également chargée dans le registre REG2 (non représenté sur la figure 5), en remplaçant la valeur de consigne précédente S2.

Il est préférable mais non nécessaire de modifier la valeur de consigne S2 de l'oscillateur OSC2 chaque fois que la valeur de consigne S1 de l'oscillateur OSC1 est modifiée afin de maintenir une différence de valeurs de consigne et ainsi de fréquences en sortie de chaque oscillateur. De plus, il est préférable de ne pas régler les valeurs de consigne de chaque oscillateur de telle sorte qu'elles soient égales à la même valeur. Autrement, si la différence de valeurs de consigne ΔS=0, une correction ne peut être calculée (division par zéro) par le diviseur 14 même si les nombres de cycle d'horloge N diffèrent pour un intervalle de temps donné.

Dans un mode de réalisation, la différence ΔS entre S1 et S2 est choisie de telle sorte qu'elle est toujours une puissance de 2. Cela simplifie la division par le diviseur 14 pour trouver le pas de fréquence FS, puisque diviser un nombre par deux revient à un déplacement d'un bit vers la droite du résultat, le bit le plus faible étant soit négligé soit déplacé en position décimale. Ce mode de réalisation donne un diviseur à cycle pour un faible coût. Par exemple, si S1 est réglé sur 0, alors S2 peut être réglé sur 2, 4, 8, 16, 32, etc. pour obtenir une différence ΔS=|S1-S2|=$2^x$. Ainsi, après l'application d'une correction CR à l'oscillateur OSC1, l'oscillateur OSC2 peut également être ajusté pour maintenir une différence d'une puissance de deux $2^x$ avec l'oscillateur OSC1. De préférence, une différence maximum ΔS est maintenue entre les valeurs de consigne S1, S2 pour une meilleure précision.

Exemples numériques

A titre de premier exemple, il est supposé que lors de l'intervalle de temps Δt$_i$, N1=6500, S1=16, N2=5500, S2=24, et N3=6000. L'unité de calcul CU1 calcule ΔNx=500, ΔNr=1000, et ΔS=8. Le pas de fréquence FS=1000/8=125, et la correction CR=500/125=4. La nouvelle valeur de consigne S1' est égale à 16+4=20 pour augmenter le retard de l'oscillateur OSC1 et obtenir le décompte souhaité de N3=6000, qui correspond à la fréquence F3 de 6000 KHz. L'oscillateur OSC2 peut être augmenté de la même correction pour une valeur de consigne S2'=28 afin de maintenir une différence de fréquence ΔS entre les deux oscillateurs OSC1, OSC2.

Lors de l'intervalle de temps suivant Δt$_{i+1}$, N1=6000, S1=20, N2=5100, S2=28, et N3=6000. Comme la différence ΔNx entre le décompte N1 de l'oscillateur OSC1 et le décompte souhaité N3 de l'oscillateur OSC1 est égale à 0, la fréquence de l'oscillateur OSC1 ne nécessite pas d'être ajustée et l'ajustement de la fréquence de l'oscillateur est atteinte après un seul intervalle de temps.

Si pour un intervalle de temps Δt$_{i++}$ ultérieur les fréquences des oscillateurs OSC1, OSC2 commencent à dériver, par exemple en raison d'une augmentation de température lors du fonctionnement, la différence entre le décompte N1 de l'oscillateur OSC1 et le décompte attendu N3 ne sera plus égale à zéro, et l'ajustement de fréquence peut être effectué à nouveau.

Il sera également compris qu'un nombre non entier peut être calculé pour la valeur de consigne S1'. Dans ce cas, la valeur de consigne S1' appliquée à l'oscillateur OSC1 peut être arrondie au nombre entier suivant ou précédent, puisqu'il n'est pas possible d'ajouter ou de soustraire une fraction d'un circuit à retard DL. Le décompte réel en sortie de l'oscillateur ne sera pas exactement égal au décompte souhaité, mais sera très certainement dans la plage de précision acceptable de l'oscillateur.

A titre d'exemple afin d'illustrer ce dernier point, il est supposé que N1=6100, S1=20, N2=6600, S2=4, et N3=6000. L'unité de calcul CU1 calcule ΔNx=100, ΔNr=500, et ΔS=16. Le pas de fréquence FS=500/16=31,25, et la correction CR=100/31,25=3,2, qui est arrondie à 3. La nouvelle valeur de consigne S1' est réglée à 23 pour diminuer la fréquence de l'oscillateur OSC1 afin d'obtenir un décompte d'environ 6006, qui est dans la plage de précision comprise entre 5910 et 6090 pour un transfert de donnée d'une précision de ± 1,5% de la fréquence souhaitée, tel qu'exigé par la norme USB 2.0.

La figure 6 est un diagramme d'un procédé de calcul de correction CR selon un mode de réalisation. Le procédé illustré sur la figure 6 comprend des étapes ST1 à ST6 utilisant le diviseur 15 de la figure 5 dans le cas où le pas de fréquence FS n'est pas un nombre entier. Dans ce mode de réalisation, un simple diviseur à décalage tel que le diviseur 14 n'est pas utilisé. Un diviseur dichotomique est utilisé, qui nécessite plusieurs cycles mais présente un faible coût.

Lors de l'étape ST1, la correction $CR_i$ est réglée sur $(S_{max}+S_{min})$ /2. Lors de l'étape ST2, une différence absolue entre le produit de la correction et du pas de fréquence $CR_i*FS$ et la différence $\Delta Nx$ entre N1 et N3 est comparée avec le pas de fréquence FS divisé par deux. Si la différence absolue est inférieure à la moitié du pas de fréquence FS, la correction est adaptée à l'ajustement de fréquence et le procédé de calcul de la correction est terminé. La correction $CR_i$ est fournie aux sommateurs 16, 17.

Sinon, si la réponse lors de l'étape ST2 est non, on détermine lors de l'étape ST3 si le produit $CR_i*FS$ est supérieur à la différence $\Delta Nx$. Si la réponse est oui, la correction doit être diminuée, et on passe à l'étape ST4. Sinon, si la réponse à l'étape ST3 est non, la correction doit être augmentée, et on passe à l'étape ST5.

Lors de l'étape ST4, la correction est diminuée en réglant une nouvelle correction $CR_{i+1}$ égale à la somme des corrections $CR_i$, $S_{min}$, divisée par deux. On retourne à l'étape ST2, où la nouvelle valeur de correction $CR_{i+1}$ est utilisée. Sinon, lors de l'étape ST5, la correction est augmentée en réglant une nouvelle correction $CR_{i+1}$ égale à la somme des corrections $CR_i$, $S_{max}$, divisée par deux. Le procédé retourne à l'étape ST2.

A titre d'exemple, si $S_{min}=0$, $S_{max}=32$, FS=60, et $\Delta Nx=50$ alors $CR_1=16$, et le calcul à l'étape ST2 donne |16*60-500|=460, supérieur à 60/2=30. Le résultat du calcul à l'étape ST13 est que la correction doit être diminuée. A l'étape ST15, la nouvelle correction $CR_2=(16+0)/2=8$. Le procédé retourne à l'étape ST2, où le calcul |8*60-500|=20, inférieur à 30. La correction de 8 est par conséquent ajoutée à la valeur de consigne S1 et la valeur de consigne S2 ou soustraite à la valeur de consigne S1 et la valeur de consigne S2.

Il est clair pour l'homme de l'art que le procédé d'ajustement de la fréquence d'horloge d'un oscillateur peut être effectué différemment en utilisant les fréquences F1, F2, les valeurs de consigne S1, S2, et la valeur de fréquence souhaitée F3.

Si l'équation 1 est considérée à nouveau, la multiplication croisée des deux premiers termes donne :

[éq. 6]

$$(F1-F3)*(S1'-S2)=(F3-F2)*(S1-S1')$$

Après avoir multiplié les deux binômes de chaque côté, en regroupant les termes S1' d'un côté, et en excluant les termes S on obtient le résultat :

[éq. 7]

$$S1'=[S1*(F3-F2)+S2*(F1-F3)]/(F1-F2)$$

La figure 7 est un schéma de principe d'un circuit d'ajustement de fréquence d'horloge CFC2 selon un autre mode de réalisation de l'invention, mettant en oeuvre le calcul de l'équation 7. Le circuit CFC2 comprend les oscillateurs OSC1, OSC2, des circuits de détermination de fréquence DCT1, DCT2, un tableau de correspondances LUT, et un circuit de calcul de fréquence FCT2. Le circuit de calcul de fréquence FCT2 comprend les registres REG1, REG2, et une unité de calcul CU2.

Les oscillateurs OSC1, OSC2, les circuits DCT1, DCT2, et les registres REG1, REG2 présentent les mêmes entrées et sorties que celles décrites en relation avec la figure 5, et ne seront pas décrits à nouveau.

L'unité de calcul CU2 comprend un comparateur 21, un comparateur 22, un comparateur 23, un multiplicateur 24, un sommateur 26, et un diviseur 27.

Le comparateur 21 reçoit sur une entrée la valeur de décompte N1 du circuit DCT1, et sur une autre entrée la valeur de décompte souhaitée N3 du microcontrôleur MC (non représenté sur la figure 7). Le comparateur 21 compare les deux valeurs, et détermine laquelle est la plus grande. En fonction de cette comparaison, le comparateur 21 effectue N3-N1 ou N1-N3, et fournit en sortie une différence $\Delta N1$, représentant une différence souhaitée de décompte de l'oscillateur entre la valeur de décompte N1 de l'oscillateur OSC1 et la valeur de décompte souhaitée N3 de l'oscillateur OSC1.

Le comparateur 22 reçoit sur une entrée la valeur de décompte N1 du circuit DCT1, et sur une autre entrée la valeur de décompte N2 du circuit DCT2. Selon l'oscillateur qui présente la fréquence la plus élevée, le comparateur 22 effectue N2-N1 ou N1-N2, et fournit en sortie une différence $\Delta N$, représentant une différence réelle de décompte de l'oscillateur.

Le comparateur 23 reçoit sur une entrée la valeur de décompte N2 du circuit DCT2, et sur une autre entrée la valeur de décompte souhaitée N3. Le comparateur 23 compare les deux valeurs, et effectue N3-N2 ou N2-N3, et fournit en sortie une différence ∆N2, représentant une différence souhaitée de décompte de l'oscillateur entre la valeur de décompte N2 de l'oscillateur OSC2 et la valeur de décompte souhaitée N3 de l'oscillateur OSC1.

Le multiplicateur 24 reçoit sur une entrée la différence ∆N2 du comparateur 23, et sur une autre entrée la valeur de consigne S1 du registre REG1. Le multiplicateur 24 multiplie ces deux valeurs, et fournit le produit S1*∆N2 en sortie. De façon similaire, le multiplicateur 25 reçoit sur une entrée la différence ∆N1 du comparateur 21, et sur une autre entrée la valeur de consigne S2 du registre REG2. Le multiplicateur 25 multiplie ces deux valeurs, et fournit le produit S2*∆N1 en sortie.

Le sommateur 26 reçoit sur une entrée le produit S1*∆N2 du multiplicateur 24, et sur une autre entrée le produit S2*∆N1 du multiplicateur 25. Le sommateur 26 ajoute ces deux produits, et fournit la somme S1*∆N2+S2*∆N1 en sortie. Enfin, le diviseur 27 reçoit sur une entrée la somme S1*∆N2+S2*∆N1 du sommateur 26, et sur une autre entrée la différence ∆N du comparateur 22. Il divise la première entrée par la seconde, et fournit le résultat, la nouvelle valeur de consigne S1', à l'oscillateur OSC1 et au registre REG1. L'oscillateur OSC1 modifie sa fréquence en conséquence, et le registre REG1 remplace la valeur de consigne S1 par la nouvelle valeur de consigne S1' (non illustré sur la figure 7).

La table de correspondances LUT reçoit en entrée la nouvelle valeur de consigne S1' et fournit en sortie une nouvelle valeur de consigne S2' correspondante, qui est fournie à l'oscillateur OSC2 et au registre REG2 (non illustré sur la figure 7).

A titre d'exemple numérique final illustrant le second mode de réalisation de l'invention, les mêmes valeurs que le premier exemple numérique sont utilisées pour illustrer le fait que les mêmes résultats peuvent être obtenus de diverses autres façons. Il est ainsi encore supposé que N1=6500, S1=16, N2=5500, S2=24, et N3=6000. L'unité de calcul CU2 calcule ∆N1=500, ∆N=1000, et ∆N2=500. S1*∆N2=8000, S2*∆N1=12000, la somme des deux termes est 20000, et la nouvelle valeur de consigne S1' est égale à 20000/1000=20, ce qui correspond au même résultat que celui obtenu précédemment. La nouvelle valeur de consigne S1' est fournie à la table de correspondances LUT, qui fournit une nouvelle valeur de consigne S2'=28 en sortie à l'oscillateur OSC2 et au registre REG2 (non représenté sur la figure 7).

Il est clair pour l'homme de l'art que divers autres modes de réalisation de l'invention peuvent être prévus. En particulier, des modes de réalisations alternatifs d'un oscillateur peuvent être prévus. Par exemple, au lieu d'un oscillateur en anneau comprenant M circuits à retard et seulement un inverseur, chaque oscillateur peut comprendre une pluralité d'inverseurs qui sont sélectionnés ou désélectionnés en conséquence.

De plus, il sera compris par l'homme de l'art que les oscillateurs OSC1, OSC2 ne sont pas nécessairement des oscillateurs en anneau, mais peuvent être n'importe quel type d'oscillateur dont la fréquence peut être ajustée en pas de fréquence réguliers, et que les circuits de détermination de fréquence d'oscillateur DCT1, DCT2 peuvent être n'importe quel moyen permettant de déterminer la fréquence d'un oscillateur autrement qu'en comptant le nombre de cycles d'horloge. Les registres REG1, REG2 ne sont pas nécessairement une partie de l'unité de calcul de fréquence FCT, et peuvent se situer à l'extérieur de ce circuit. La nouvelle valeur de consigne de fréquence S1' peut être calculée par rapport à la seconde valeur de consigne S2, mais pour une précision optimale, il est préférable de calculer S1' par rapport à la valeur de consigne S1. Le procédé d'ajustement de la fréquence de l'oscillateur peut également inclure une étape de comparaison de la valeur de décompte N1 avec une première et/ou une seconde valeur seuil, par exemple 5910 et 6090 dans l'exemple décrit ci-dessus. Si la valeur de décompte N1 est inférieure ou supérieure aux valeurs seuil, alors le procédé d'ajustement peut être effectué, sinon, le procédé n'est pas effectué avant que la valeur de décompte N1 se trouve en dehors de la ou des valeurs seuil acceptables.

De plus, il sera compris que dans la description qui précède, la valeur de fréquence souhaitée de 6000 KHz a été fournie à titre d'exemple uniquement, et que toute autre valeur de fréquence souhaitée peut être utilisée. Enfin, les termes "fréquence" F et "décompte" N peuvent généralement être échangés dans les équations et les dessins.

Bien que l'invention ait été initialement conçue en relation avec le problème technique présenté en introduction (voir la tête de page 3), l'homme du métier comprendra que des modes de réalisation de l'invention peuvent être prévues qui ne résolvent pas ce problème technique. Plus particulièrement, des modes de réalisation peuvent être prévues dans lesquelles la détermination de la fréquence du deuxième oscillateur est fait dans un intervalle de temps autre que l'intervalle de temps pour la détermination de la fréquence du premier oscillateur, par exemple deux intervalles de temps consécutives.

**Revendications**

1. Procédé d'ajustement d'une fréquence d'horloge d'oscillateur, comprenant les étapes consistant à :

      - prévoir un premier oscillateur (OSC1),
      - appliquer une première valeur de consigne (S1) au premier oscillateur,

- déterminer une fréquence du premier oscillateur (F1) dans un premier intervalle de temps ($\Delta t_i$),
**caractérisé en ce qu'**il comprend en outre les étapes consistant à :
- prévoir un second oscillateur (OSC2),
- appliquer une seconde valeur de consigne (S2) au second oscillateur,
- déterminer une fréquence du second oscillateur (F2) dans un deuxième intervalle de temps ($\Delta t_i$),
- déterminer une nouvelle valeur de consigne de fréquence (S1') à partir des première et seconde valeurs de fréquence (F1, F2), des première et seconde valeurs de consigne (S1, S2), et d'une valeur de fréquence souhaitée (F3), et
- appliquer la nouvelle valeur de consigne de fréquence (S1') à l'un des oscillateurs (OSC1).

2. Procédé selon la revendication 1, comprenant également les étapes consistant à :

- compter le nombre de cycles d'horloge (N1) du premier oscillateur (OSC1) dans le premier intervalle de temps ($\Delta t_i$) afin de déterminer la fréquence du premier oscillateur (F1), et
- compter le nombre de cycles d'horloge (N2) du second oscillateur (OSC2) durant le deuxième intervalle de temps ($\Delta t_i$) afin de déterminer la fréquence du second oscillateur (F2).

3. Procédé selon l'une des revendications 1 ou 2, dans lequel les premier et deuxième intervalles de temps sont le même intervalle de temps.

4. Procédé selon l'une des revendications 1 à 3, dans lequel l'étape consistant à déterminer la nouvelle valeur de consigne (S1') comprend en outre les étapes consistant à :

- déterminer une première différence ($\Delta Nr$) entre la fréquence du premier oscillateur et la fréquence du second oscillateur (F1, F2),
- déterminer une seconde différence ($\Delta S$), entre la première valeur de consigne de fréquence et la seconde valeur de consigne de fréquence (S1, S2),
- diviser la première différence par la seconde différence afin d'obtenir un pas de fréquence (FS),
- déterminer une troisième différence ($\Delta$), entre la fréquence du premier oscillateur ou la fréquence du second oscillateur (F1, F2) et la valeur de fréquence souhaitée (F3),
- diviser la troisième différence ($\Delta Nx$) par le pas de fréquence (FS) afin d'obtenir une valeur de correction (CR), et
- ajouter la valeur de correction (CR) à la première valeur de consigne (S1) afin d'obtenir la nouvelle valeur de consigne (S1').

5. Procédé selon l'une des revendications 1 à 3, dans lequel l'étape consistant à déterminer la nouvelle valeur de consigne comprend en outre les étapes consistant à :

- déterminer une première différence ($\Delta N$) entre la fréquence du premier oscillateur et la fréquence du second oscillateur (F1, F2),
- multiplier la première valeur de consigne (S1) par une différence ($\Delta N2$) entre la valeur de fréquence souhaitée (F3) et la fréquence du second oscillateur (F2) afin d'obtenir un premier produit (S1*$\Delta N2$),
- multiplier la seconde valeur de consigne (S2) par une différence ($\Delta N1$) entre la valeur de fréquence souhaitée (F3) et la fréquence du premier oscillateur (F1) afin d'obtenir un second produit (S2*$\Delta N1$),
- ajouter le premier produit (S1*$\Delta N2$) et le second produit (S2*$\Delta N1$) afin d'obtenir une première somme (S1*$\Delta N2$+S2*$\Delta N1$), et
- diviser la première somme (S1*$\Delta N2$+S2*$\Delta N1$) par la première différence ($\Delta N$) afin d'obtenir la nouvelle valeur de consigne (S1').

6. Procédé selon l'une des revendications 1 à 5, dans lequel l'étape consistant à déterminer une valeur de fréquence d'oscillateur d'un oscillateur comprend en outre les étapes consistant à :

- recevoir un signal de synchronisation (SNC), et
- compter un nombre de cycles d'horloge (N1, N2) de l'oscillateur (OSC1, OSC2) entre deux occurrences consécutives du signal de synchronisation.

7. Procédé selon l'une des revendications 1 à 6, comprenant en outre l'étape consistant à ajuster la fréquence du second oscillateur (OSC2) afin de maintenir une différence de fréquence par rapport au premier oscillateur (OSC1).

**8.** Procédé selon la revendication 7, comprenant en outre l'étape consistant à sélectionner la seconde valeur de consigne de fréquence (S2') de telle sorte que la différence entre la première valeur de consigne et la seconde valeur de consigne est une puissance de deux.

**9.** Procédé selon l'une des revendications 1 à 8, pour ajuster la fréquence d'horloge d'un dispositif USB (DV) recevant un signal de synchronisation (SNC) au moyen d'une interface de communication (ICT).

**10.** Circuit d'ajustement de fréquence d'horloge comprenant un premier oscillateur (OSC1) pour générer un premier signal d'horloge (CLK1) par rapport à une première valeur de consigne de fréquence (S1), **caractérisé en ce qu'**il comprend en outre :

- un second oscillateur (OSC2) pour générer un second signal d'horloge (CLK2) par rapport à une seconde valeur de consigne de fréquence (S2),
et est configuré pour:
- appliquer une première valeur de consigne de fréquence (S1) au premier oscillateur et une seconde valeur de consigne de fréquence (S2) au deuxième oscillateur,
- déterminer une fréquence (F1) du premier oscillateur dans un premier intervalle de temps ($\Delta t_i$), et une fréquence (F2) du deuxième oscillateur dans un deuxième intervalle de temps ($\Delta t_i$),
- déterminer une nouvelle valeur de consigne de fréquence (S1') à partir des première et seconde valeurs de fréquence (F1, F2), des première et seconde valeurs de consigne (S1, S2), et d'une valeur de fréquence souhaitée (F3), et
- appliquer la nouvelle valeur de consigne de fréquence (S1') à l'un des oscillateurs (OSC1).

**11.** Circuit d'ajustement de fréquence d'horloge selon la revendication 10, comprenant deux compteurs recevant un des signaux d'horloge (CLK1, CLK2), et fournissant une valeur de décompte (N1, N2) représentative du nombre de cycles d'horloge comptés dans le premier ou le deuxième intervalle de temps ($\Delta t_i$).

**12.** Circuit d'ajustement de fréquence d'horloge selon l'une des revendications 10 ou 11, configuré pour déterminer la fréquence (F1) du premier oscillateur et la fréquence (F2) du deuxième oscillateur dans le même intervalle de temps ($\Delta t_i$).

**13.** Circuit d'ajustement de fréquence d'horloge selon l'une des revendications 10 à 12, dans lequel le premier oscillateur et le second oscillateur (OSC1, OSC2) comprennent des oscillateurs en anneau, chacun comprenant des circuits à retard (DL), des multiplexeurs (MUX), et au moins un inverseur (IG1).

**14.** Circuit d'ajustement de fréquence d'horloge selon l'une des revendications 10 à 13, dans lequel le circuit reçoit des signaux de synchronisation (SNC) délimitant l'intervalle de temps ($\Delta t_i$), et le signal de synchronisation (SNC) est un signal d'entretien envoyé en respectant la norme USB 2.0.

**15.** Dispositif USB 2.0 (DV) comprenant :

- un circuit d'interface (ICT) pour recevoir un signal de données (DS) comprenant un signal de synchronisation (SNC),
- un microcontrôleur (MC), et
- un circuit d'ajustement de fréquence d'horloge (CFC, CFC1, CFC2) selon l'une des revendications 10 à 14.

**Patentansprüche**

**1.** Verfahren zur Anpassung einer Oszillatortaktfrequenz, umfassend die Schritte, die darin bestehen:

- einen ersten Oszillator (OSC1) vorzusehen,
- einen ersten Sollwert (S1) an den ersten Oszillator anzulegen,
- eine Frequenz des ersten Oszillators (F1) in einem ersten Zeitintervall ($\Delta t_i$) zu bestimmen,
**dadurch gekennzeichnet, dass** es ferner die Schritte umfasst, die darin bestehen:
- einen zweiten Oszillator (OSC2) vorzusehen,
- einen zweiten Sollwert (S2) an den zweiten Oszillator anzulegen,
- eine Frequenz des zweiten Oszillators (F2) in einem zweiten Zeitintervall ($\Delta t_i$) zu bestimmen,

- ausgehend von dem ersten und zweiten Frequenzwert (F1, F2), dem ersten und zweiten Sollwert (S1, S2) und einem gewünschten Frequenzwert (F3) einen neuen Frequenzsollwert (S1') zu bestimmen, und
- den neuen Frequenzsollwert (S1') an einen der Oszillatoren (OSC1) anzulegen.

2.  Verfahren nach Anspruch 1, das auch die folgenden Schritte umfasst, die darin bestehen:

    - die Anzahl der Taktzyklen (N1) des ersten Oszillators (OSC1) in dem ersten Zeitintervall ($\Delta t_i$) zu zählen, um die Frequenz des ersten Oszillators (F1) zu bestimmen, und
    - die Anzahl der Taktzyklen (N2) des zweiten Oszillators (OSC2) während des zweiten Zeitintervalls ($\Delta t_i$) zu zählen, um die Frequenz des zweiten Oszillators (F2) zu bestimmen.

3.  Verfahren nach einem der Ansprüche 1 oder 2, in dem das erste und zweite Zeitintervall dasselbe Zeitintervall sind.

4.  Verfahren nach einem der Ansprüche 1 bis 3, in dem der Schritt, der darin besteht, den neuen Sollwert (S1') zu bestimmen, ferner die Schritte umfasst, die darin bestehen:

    - eine erste Differenz ($\Delta Nr$) zwischen der Frequenz des ersten Oszillators und der Frequenz des zweiten Oszillators (F1, F2) zu bestimmen,
    - eine zweite Differenz ($\Delta S$) zwischen dem ersten Frequenzsollwert und dem zweiten Frequenzsollwert (S1, S2) zu bestimmen,
    - die erste Differenz durch die zweite Differenz zu dividieren, um einen Frequenzschritt (FS) zu erhalten,
    - eine dritte Differenz ($\Delta Nx$) zwischen der Frequenz des ersten Oszillators oder der Frequenz des zweiten Oszillators (F1, F2) und dem gewünschten Frequenzwert (F3) zu bestimmen,
    - die dritte Differenz ($\Delta Nx$) durch den Frequenzschritt (FS) zu dividieren, um einen Korrekturwert (CR) zu erhalten, und
    - den Korrekturwert (CR) zu dem ersten Sollwert (S1) zu addieren, um den neuen Sollwert (S1') zu erhalten.

5.  Verfahren nach einem der Ansprüche 1 bis 3, in dem der Schritt, der darin besteht, den neuen Sollwert zu bestimmen, ferner die Schritte umfasst, die darin bestehen:

    - eine erste Differenz ($\Delta N$) zwischen der Frequenz des ersten Oszillators und der Frequenz des zweiten Oszillators (F1, F2) zu bestimmen,
    - den ersten Sollwert (S1) mit einer Differenz ($\Delta N2$) zwischen dem gewünschten Frequenzwert (F3) und der Frequenz des zweiten Oszillators (F2) zu multiplizieren, um ein erstes Produkt (S1*$\Delta N2$) zu erhalten,
    - den zweiten Sollwert (S2) mit einer Differenz ($\Delta N1$) zwischen dem gewünschten Frequenzwert (F3) und der Frequenz des ersten Oszillators (F1) zu multiplizieren, um ein zweites Produkt (S2*$\Delta N1$) zu erhalten,
    - das erste Produkt (S1*$\Delta N2$) und das zweite Produkt (S2*$\Delta N1$) zu addieren, um eine erste Summe (S1*$\Delta N2$+S2*$\Delta N1$) zu erhalten, und
    - die erste Summe (S1*$\Delta N2$+S2*$\Delta N1$) durch die erste Differenz ($\Delta N$) zu dividieren, um den neuen Sollwert (S1') zu erhalten.

6.  Verfahren nach einem der Ansprüche 1 bis 5, in dem der Schritt, der darin besteht, einen Frequenzwert eines Oszillators zu bestimmen, ferner die Schritte umfasst, die darin bestehen:

    - ein Synchronisationssignal (SNC) zu empfangen, und
    - eine Anzahl an Taktzyklen (N1, N2) des Oszillators (OSC1, OSC2) zwischen zweimaligem Auftreten in Folge des Synchronisationssignals zu zählen.

7.  Verfahren nach einem der Ansprüche 1 bis 6, das ferner den Schritt umfasst, der darin besteht, die Frequenz des zweiten Oszillators (OSC2) anzupassen, um eine Frequenzdifferenz in Bezug auf den ersten Oszillator (OSC1) aufrechtzuerhalten.

8.  Verfahren nach Anspruch 7, das ferner den Schritt umfasst, der darin besteht, den zweiten Frequenzsollwert (S2') so auszuwählen, dass die Differenz zwischen dem ersten Sollwert und dem zweiten Sollwert eine Potenz von zwei ist.

9.  Verfahren nach einem der Ansprüche 1 bis 8, zur Anpassung der Taktfrequenz einer, ein Synchronisationssignal (SNC) mittels einer Kommunikationsschnittstelle (ICT) empfangenden USB-Vorrichtung (DV).

10. Taktfrequenz-Anpassungsschaltung, umfassend einen ersten Oszillator (OSC1), um ein erstes Taktsignal (CLK1) in Bezug auf einen ersten Frequenzsollwert (S1) zu generieren, **dadurch gekennzeichnet, dass** sie ferner folgendes umfasst:

- einen zweiten Oszillator (OSC2), um ein zweites Taktsignal (CLK2) in Bezug auf einen zweiten Frequenzsollwert (S2) zu generieren,

und die konfiguriert ist, um:

- einen ersten Frequenzsollwert (S1) an den ersten Oszillator und einen zweiten Frequenzsollwert (S2) an den zweiten Oszillator anzulegen,
- eine Frequenz (F1) des ersten Oszillators in einem ersten Zeitintervall ($\Delta ti$) und eine Frequenz (F2) des zweiten Oszillators in einem zweiten Zeitintervall ($\Delta ti$) zu bestimmen,
- einen neuen Frequenzsollwert (S1') ausgehend von dem ersten und zweiten Frequenzwert (F1, F2), dem ersten und zweiten Sollwert (S1, S2) und einem gewünschten Frequenzwert (F3) zu bestimmen, und
- den neuen Frequenzsollwert (S1') an einen der Oszillatoren (OSC1) anzulegen.

11. Taktfrequenz-Anpassungsschaltung nach Anspruch 10, umfassend zwei Zähler, die eines der Taktsignale (CLK1, CLK2) empfangen und einen, für die Anzahl der in dem ersten oder zweiten Zeitintervall ($\Delta ti$) gezählten Taktzyklen repräsentativen Zählwert (N1, N2) abgeben.

12. Taktfrequenz-Anpassungsschaltung nach einem der Ansprüche 10 oder 11, die konfiguriert ist, um die Frequenz (F1) des ersten Oszillators und die Frequenz (F2) des zweiten Oszillators in demselben Zeitintervall ($\Delta ti$) zu bestimmen.

13. Taktfrequenz-Anpassungsschaltung nach einem der Ansprüche 10 bis 12, in der der erste Oszillator und der zweite Oszillator (OSC1, OSC2) Ringoszillatoren umfassen, wobei jeder der Ringoszillatoren Verzögerungsschaltungen (DL), Multiplexer (MUX) und wenigstens einen Inverter (IG1) umfassen.

14. Taktfrequenz-Anpassungsschaltung nach einem der Ansprüche 10 bis 13, in der die Schaltung Synchronisationssignale (SNC) empfängt, die das Zeitintervall ($\Delta ti$) begrenzen, und das Synchronisationssignal (SNC) ein, unter Einhaltung der Norm USB 2.0 gesendetes Aufrechterhaltungssignal ist.

15. USB 2.0 Vorrichtung (DV) umfassend:

- eine Schnittstellenschaltung (ICT), um ein, ein Synchronisationssignal (SNC) umfassendes Datensignal (DS) zu empfangen,
- einen Mikrokontroller (MC), und
- eine Taktfrequenz-Anpassungsschaltung (CFC, CFC1, CFC2) nach einem der Ansprüche 10 bis 14.


**Claims**

1. Method for adjusting an oscillator clock frequency, comprising the steps of:

- providing a first oscillator (OSC1),
- applying a first setpoint value (S1) to the first oscillator,
- determining a first oscillator frequency value (F1) within a first time frame ($\Delta t_i$),
**characterized in that** it further comprises the steps of:
- providing a second oscillator (OSC2),
- applying a second setpoint value (S2) to the second oscillator,
- determining a second oscillator frequency value (F2) within a second time frame ($\Delta t_i$),
- determining a new frequency setpoint value (S1') from the first and second frequency values (F1, F2), the first and second setpoint values (S1, S2), and a desired frequency value (F3), and
- applying the new frequency setpoint value (S1') to one of the oscillators (OSC1).

2. Method according to claim 1, further comprising the steps of:

- counting the number of clock cycles (N1) of the first oscillator (OSC1) within the first time frame ($\Delta t_i$) to determine the first frequency value (F1), and
- counting the number of clock cycles (N2) of the second oscillator (OSC2) within the second time frame ($\Delta t_i$) to determine the second frequency value (F2).

3. Method according to one of claims 1 or 2, wherein the first and second time frames are the same time frame.

4. Method according to one of claims 1 to 3, wherein the step of determining the new setpoint value (S1') further comprises the steps of:

- determining a first difference ($\Delta Nr$) between the first oscillator frequency value and second oscillator frequency value (F1, F2),
- determining a second difference ($\Delta S$), between the first setpoint value and second setpoint value (S1, S2),
- dividing the first difference by the second difference to obtain a frequency step (FS),
- determining a third difference ($\Delta Nx$), between the first oscillator frequency value or the second oscillator frequency value (F1, F2) and the desired frequency value (F3),
- dividing the third difference ($\Delta Nx$) by the frequency step (FS) to obtain a correction value (CR), and
- adding the correction value (CR) to the first setpoint value (S1) to obtain the new setpoint value (S1').

5. Method according to one of claims 1 to 3, wherein the step of determining the new setpoint value further comprises the steps of:

- determining a first difference ($\Delta N$) between the first oscillator frequency value and second oscillator frequency value (F1, F2),
- multiplying the first setpoint value (S1) by a difference ($\Delta N2$) between the desired frequency value (F3) and the second oscillator frequency value (F2) to obtain a first product (S1*$\Delta N2$),
- multiplying the second setpoint value (S2) by a difference ($\Delta N1$) between the desired frequency value (F3) and the first oscillator frequency value (F1) to obtain a second product (S2*$\Delta N1$),
- adding the first (S1*$\Delta N2$) product and second (S2*$\Delta N1$) product to obtain a first sum (S1*$\Delta N2$+S2*$\Delta N1$), and
- dividing the first sum (S1*$\Delta N2$+S2*$\Delta N1$) by the first difference ($\Delta N$) to obtain the new setpoint value (S1').

6. Method according to one of claims 1 to 5, wherein the step of determining an oscillator frequency value of an oscillator further comprises the steps of:

- receiving a synchronization signal (SNC), and
- counting a number of clock cycles (N1, N2) of the oscillator (OSC1, OSC2) between two consecutive instances of the synchronization signal.

7. Method according to one of claims 1 to 6, further comprising a step of adjusting the frequency of the second oscillator (OSC2) to maintain a difference in frequency with respect to the first oscillator (OSC1).

8. Method according to claim 7, further comprising a step of selecting the second frequency setpoint (S2') so that the difference between the first setpoint value and second setpoint value is a power of two.

9. Method according to one of claims 1 to 8, to adjust the clock frequency of a USB device (DV) receiving a synchronization signal (SNC) by means of a communication interface (ICT).

10. Clock frequency adjusting circuit comprising a first oscillator (OSC1) for generating a first clock signal (CLK1) with respect to a first frequency setpoint value (S1), **characterised in that** it further comprises:

- a second oscillator (OSC2) for generating a second clock signal (CLK2) with respect to a second frequency setpoint value (S2),
and **in that** it is configured to:
- apply a first setpoint value (S1) to the first oscillator and a second setpoint value (S2) to the second oscillator,
- determine a first oscillator frequency value (F1) within a first time frame ($\Delta t_i$), and a second oscillator frequency value (F2) within a second time frame ($\Delta t_i$),
- determine a new frequency setpoint value (S1') from the first and second frequency values (F1, F2), the first and second setpoint values (S1, S2), and a desired frequency value (F3), and

- apply the new frequency setpoint value (S1') to one of the oscillators (OSC1).

**11.** Clock frequency adjusting circuit according to claim 10, comprising two counters receiving one of the clock signals (CLK1, CLK2), and supplying a count number value (N1, N2) representative of the number of clock cycles counted within the first or second time frame ($\Delta t_i$).

**12.** Clock frequency adjusting circuit according to one of claims 10 or 11, configured to determine the first oscillator frequency value (F1) and the second oscillator frequency value (F2) within the same time frame ($\Delta t_i$).

**13.** Clock frequency adjusting circuit according to one of claims 10 to 12, wherein the first oscillator and second oscillator (OSC1, OSC2) comprise ring oscillators, each comprising delay circuits (DL), multiplexors (MUX), and at least one inverter (IG1).

**14.** Clock frequency adjusting circuit according to one of claims 10 to 13, wherein the circuit receives synchronization signals (SNC) delimiting the time frame ($\Delta t_i$), and the synchronization signal (SNC) is a keep alive signal sent according to the USB 2.0 specification.

**15.** USB 2.0 device (DV) comprising:

- an interface circuit (ICT) for receiving a data signal (DS) comprising a synchronization signal (SNC),
- a microcontroller (MC), and
- a clock frequency adjusting circuit (CFC, CFC1, CFC2) according to one of claims 10 to 14.

## Fig. 1
## (Art Antérieur)

CLK ← 2 ← S ← 3 ← SNC

1

DV

BS

HC ← DS(SNC) → ICT → DS(SNC) → MC

F3 | SNC

CFC

OSC1
S1' → S1 — CLK1(F1) → DCT1

DCT2 ← CLK2(F2) — OSC2
S2 ← S2'

F1 | F2

F3

## Fig. 2

FCT

S1' | S2'

### Fig. 3

F

RC

P1

F1

P3

F3

P2

F2

S1 | S1' | S2 | S

### Fig. 6

ST1 — $CR_i = (S_{max} + S_{min})/2$

ST2 — $|CR_i * FS - \Delta Nx| < FS/2?$

Oui | Non

ST6 — Fournir $CR_i$ aux add. 16, 17

ST3 — $CR_i * FS > \Delta Nx$ ?

Non | Oui

ST4 — $CR_{i+1} = (CR_i + S_{min})/2$

ST5 — $CR_{i+1} = (CR_i + S_{max})/2$

### Fig. 4

$DL_1$ → $MUX_1$ → $DL_2$ → $MUX_2$ — • • • • — $DL_M$ → $MUX_M$ → IG → CLK

$CS_1$ | $CS_2$ | $CS_M$

OSC

Fig. 5

Fig. 7

EP 2 549 355 B1

**EP 2 549 355 B1**

## RÉFÉRENCES CITÉES DANS LA DESCRIPTION

**Documents brevets cités dans la description**

- US 5815043 A

- US 6204694 B